# EUROPEAN PATENT APPLICATION

(11) **EP 2 712 769 A1**
(43) Date of publication of application: **02.04.2014**
(21) Application number: 13185092.7
(22) Date of filing: 19.09.2013
(51) Int. Cl.: B60R 16/02, H01R 31/02

(54) **Electrical power distribution module for a utility vehicle**

(30) Priority: 26.09.2012 TW 101135338
(71) Applicant: Kwang Yang Motor Co., Ltd., Kaohsiung City 807 (TW)
(72) Inventor: Tseng, Chien-Ping, 82946 Kaohsiung City, TW (TW)
(74) Representative: Fleuchaus, Michael A.

(57) **Abstract**

An electrical power distribution module (100) is adapted for use with a utility vehicle, which includes a vehicle body frame (31), and an electric generator (33) driven by an engine (32) to generate electrical power, and includes: a hollow casing (1) secured to the vehicle body frame (31) ; a mounting plate (2) connected to the casing (1) for closing a front end opening (11) thereof and secured to the vehicle body frame (31); a cover body (4) connected pivotally to the mounting plate (2) for partially covering an outer surface (21) thereof when in a closed position; and an electrical unit (5) mounted to an assembly of the casing (1) and the mounting plate (2) and operable to generate, based on the electrical power from the electric generator (33), multiple voltage outputs each having an individual voltage.

## Description

The invention relates to an electrical power generation system for a vehicle, and more particularly to an electrical power distribution module for a utility vehicle.

For a utility vehicle, such as an all terrain vehicle, there is provided an electric generator that is generally driven by a vehicle engine to generate electrical power, which is used to charge a vehicle battery supplying power to the utility vehicle itself. Thus, suchutilityvehicle cannot provide a specific power output, such as an AC voltage of 110 or 220 volt, for an external electrical appliance. In this case, such utility vehicle may need a portable electric generator serving as a backup power supply to satisfy additional electrical power requirements. However, the portable electric generator is usually is disposed at a location behind the vehicle seats, thereby resulting in inconvenience during use.

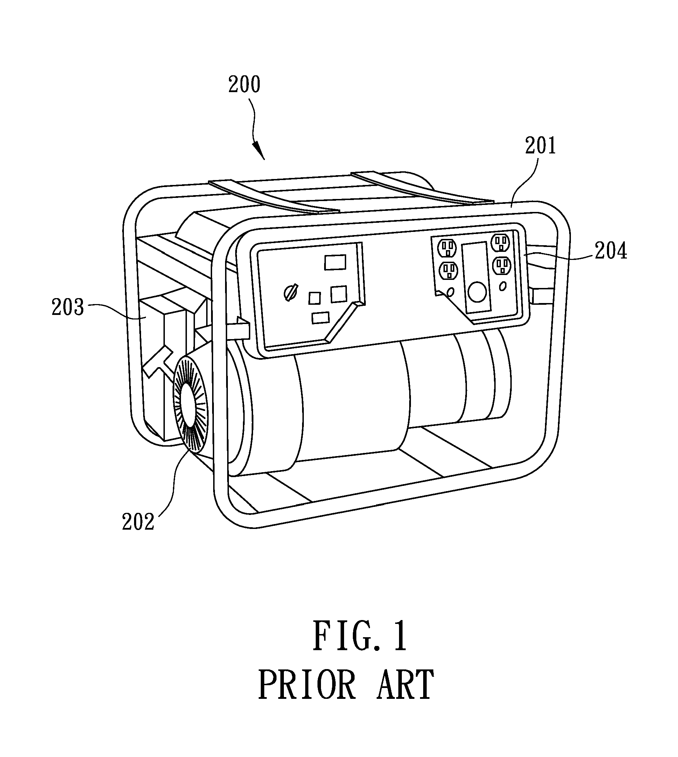

Referring to Figure 1, a portable fuel powered electric generator 200 is shown to include a main frame 201, an electrical power generation unit 202 mounted to the main frame 201 for generating electrical power, a fuel supply container 203 mounted to the main frame 201 and connected to the electrical power generation unit 202, a circuit unit (not shown) coupled to the electrical power generation unit 202, and an operation panel 204 secured to the main frame 201 and provided with a plurality of power sockets, which are coupled to the circuit unit for supplying individual voltage outputs therethrough. However, if the portable fuel powered electric generator 200 is used with a utility vehicle that is often situated in dusty, misty or foggy environments, electrical components thereof may be easily damaged.

Therefore, an object of the present invention is to provide an electrical power distribution module for a utility vehicle that can overcome the aforesaid drawbacks of the prior art.

According to the present invention, there is provided an electrical power distribution module for a utility vehicle. The utility vehicle includes a vehicle body frame, an engine mounted to the vehicle body frame, an electric generator mounted to the vehicle body frame and driven by the engine to generate electrical power, and a front protection plate secured to a front portion of the vehicle body frame and provided with a steering wheel and a dashboard thereon. The electrical power distribution module of the invention comprises a hollow casing, a mounting plate, a cover body, and an electrical unit.

The casing is adapted to be secured to the front portion of the vehicle body frame and configured with an accommodating space therein. The casing has a front end opening in spatial communication with the accommodating space.

The mounting plate is connected to the casing for closing the front end opening thereof, and is adapted to be secured to the front protection plate of the utility vehicle. The mounting plate has an outer surface.

The cover body is connected pivotally to the mounting plate, and is rotatable relative to the mounting plate between a closedposition, where the cover body partially covers the outer surface of the mounting plate, and an open position, where the outer surface of the mounting plate is exposed.

The electrical unit is mounted to an assembly of the casing and the mounting plate, and is adapted to receive the electrical power from the electric generator of the utility vehicle. The electrical unit is operable to generate, based on the electrical power, a plurality of voltage outputs, each of which has an individual voltage.

Other features and advantages of the present invention will become apparent in the following detailed description of the preferred embodiment with reference to the accompanying drawings, of which:
Figure 1 is a perspective view of a conventional portable electric generator;
Figure 2 is a schematic side view showing the preferred embodiment of an electrical power distribution module according to the present invention when assembled to a utility vehicle;
Figure 3 is a fragmentary schematic partially sectional view showing the preferred embodiment when assembled to the utility vehicle;
Figure 4 is a fragmentary schematic front view showing the preferred embodiment when assembled to the utility vehicle;
Figure 5 is a schematic side view showing the preferred embodiment;
Figure 6 is an exploded perspective view showing the preferred embodiment without an electrical unit;
Figure 7 is a schematic front view showing the preferred embodiment;
Figure 8 is a schematic sectional view of the preferred embodiment taken along line VIII-VIII in Figure 7;
Figure 9 is a schematic block diagram illustrating the electrical unit of the preferred embodiment; and
Figure 10 is a schematic front view showing the preferred embodiment without a cover body.

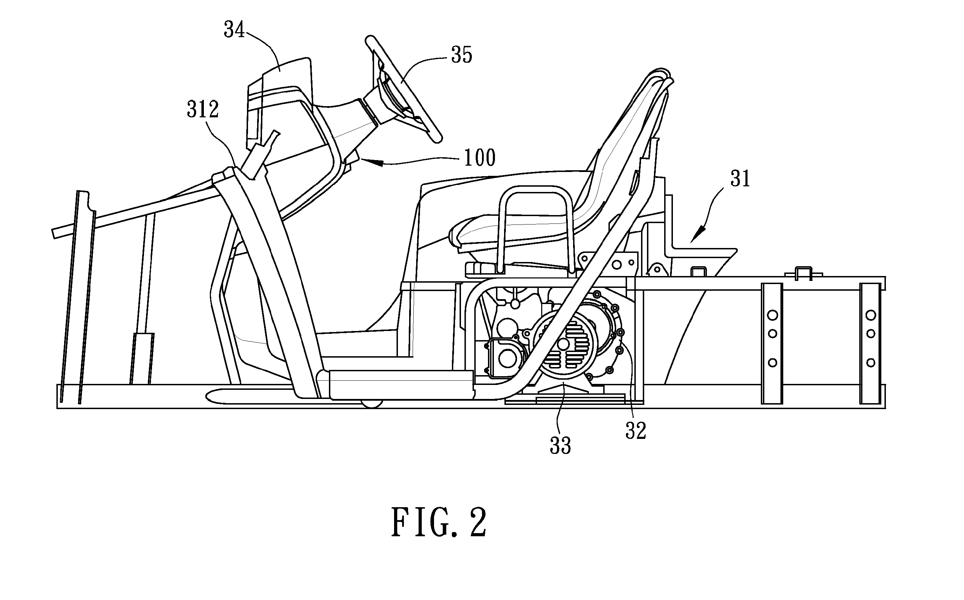

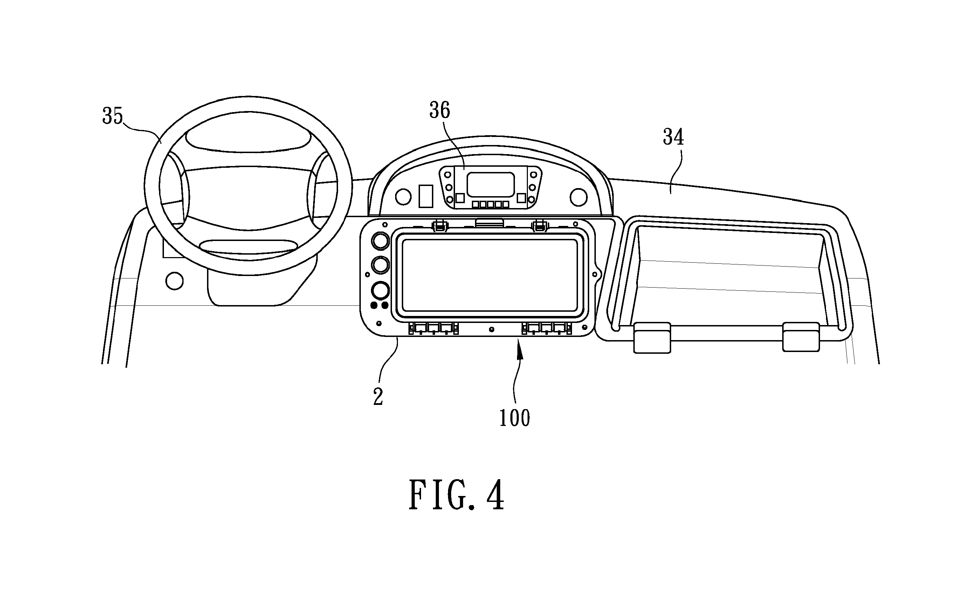

Referring to Figures 2 to 4, the preferred embodiment of an electrical power distribution module 100 according to the present invention is shown to use with a utility vehicle, such as an all terrain vehicle. The utility vehicle includes a vehicle body frame 31, an engine 32 mounted to the vehicle body frame 31, an electric generator 33 mounted to the vehicle body frame 31 and driven by the engine 32 to generate electrical power, and a front protection plate 34 secured to a front portion 312 of the vehicle body frame 31 and provided with a steering wheel 35 and a dashboard 36 thereon. In this embodiment, the electrical power distribution module 100 is mounted to the front protection plate 34, is adjacent to the steering wheel 35 and is disposed under the dashboard 36 (see Figure 4).

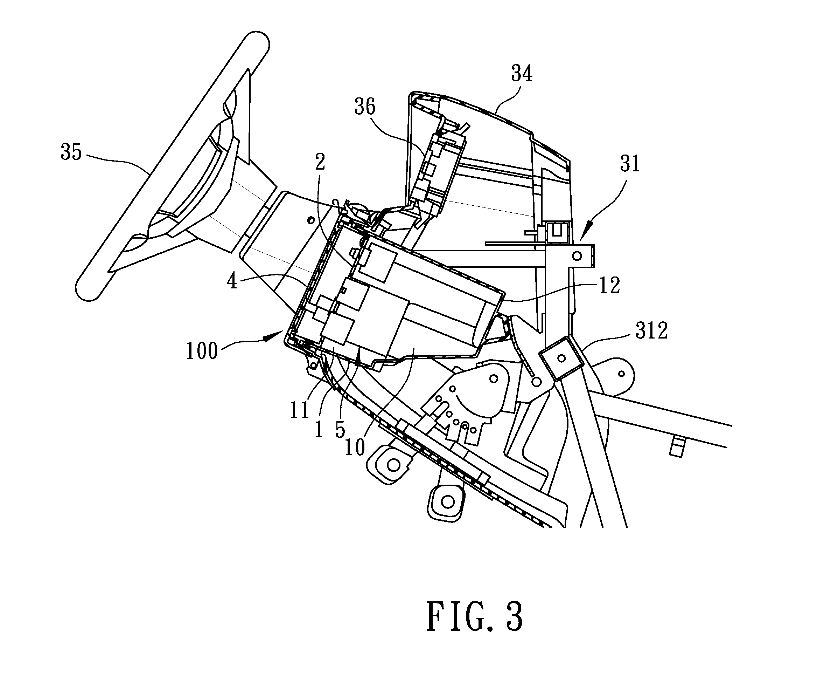

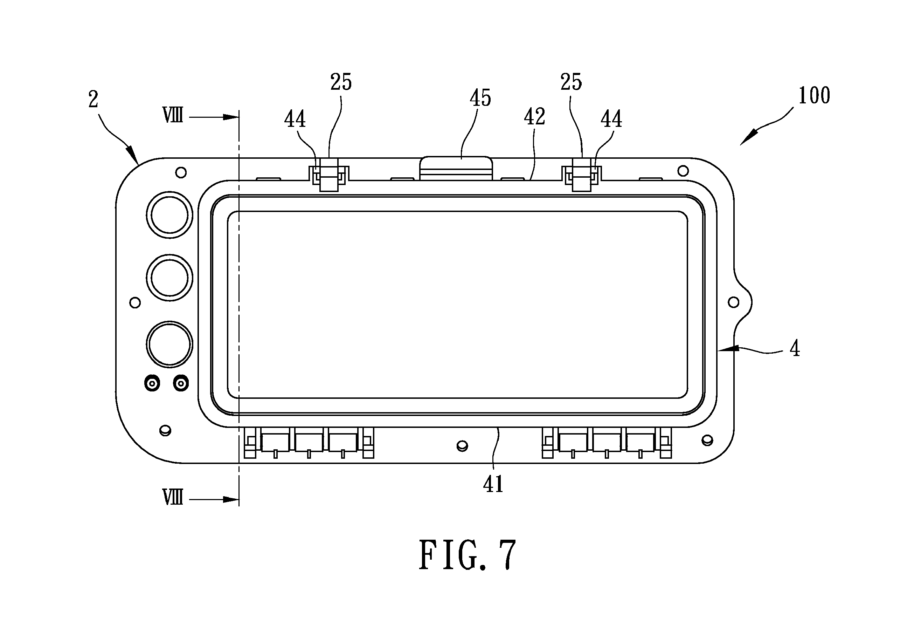

Referring to Figures 3, 5, 7 and 8, the electrical power distribution module 100 includes a hollow casing 1, a mounting plate 2, a cover body 4, and an electrical unit 5.

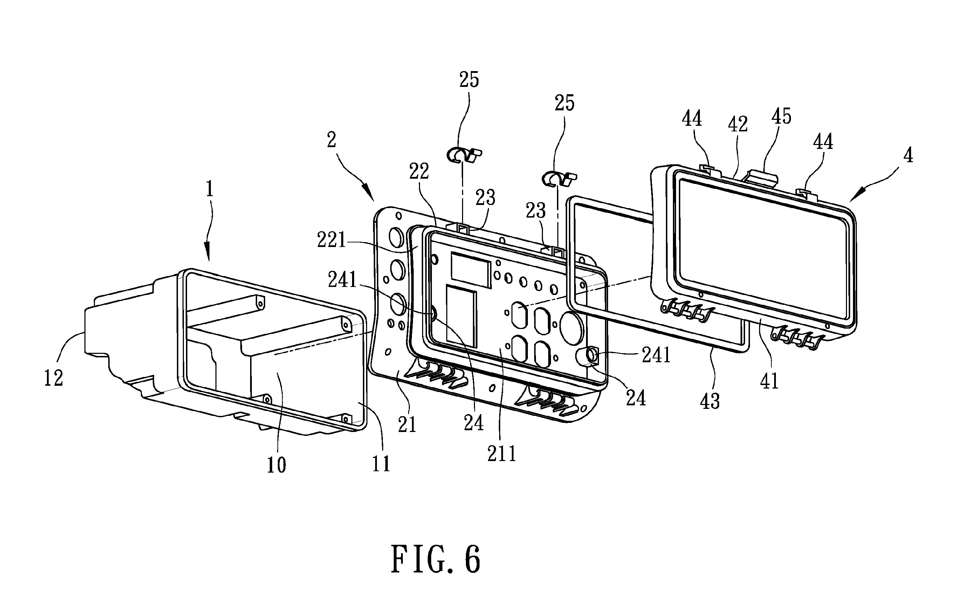

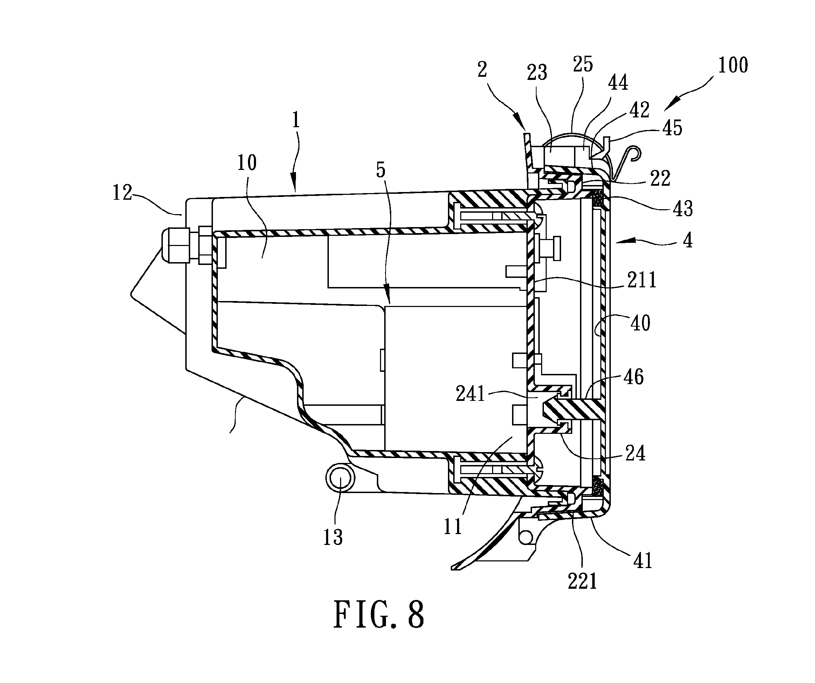

Referring further to Figure 6, the casing 1 is configured with an accommodating space 10 therein, and has a front end opening 11 in spatial communication with the accommodating space 10 and a rear end 12. As shown in Figure 3, the rear end 12 of the casing 1 is adapted to be secured to the front portion 312 of the vehicle body frame 31, and the front end opening 11 of the casing 1 is adapted to be exposed from the front protection plate 34 of the utility vehicle. The casing 1 further has a rear drain outlet 13 (see Fig. 8) atabottomthereof. The rear drain outlet 13 is in spatial communication with the accommodating space 10.

The mounting plate 2 is connected to the casing 1 for closing the front end opening 11 thereof, and is adapted to be secured to the front protection plate 34 of the utility vehicle (see Figure 4). The mounting plate 2 further has an outer surface 21. In this embodiment, referring again to Figure 6, the mounting plate 2 has a looped projection 22, two resilient anchoring fasteners 25, two fastener-mounting seats 23, and two protrusions 24 for positioning. The looped projection 22 integrally projects from the outer surface 21 of the mounting plate 2 such that the outer surface 21 of the mounting plate 2 defines a rectangular mounting surface area 211 surrounded by the looped projection 22. The mounting surface area 211 is formed with a plurality of component-mounting holes. The looped projection 22 has an outer circumference 221. The fastener-mounting seats 23 are integrally formed on the outer surface 21 of the mounting plate 2, and are disposed spacedly outside the mounting surface area 211 and adjacent to an upper portion of the looped projection 22. The anchoring fasteners 25 are respectively mounted to the fastener-mounting seats 23. The protrusions 24 integrally protrude from the mounting surface area 211 of the outer surface 21 of the mounting plate 2. Each protrusion 24 is formed with a positioning hole 241.

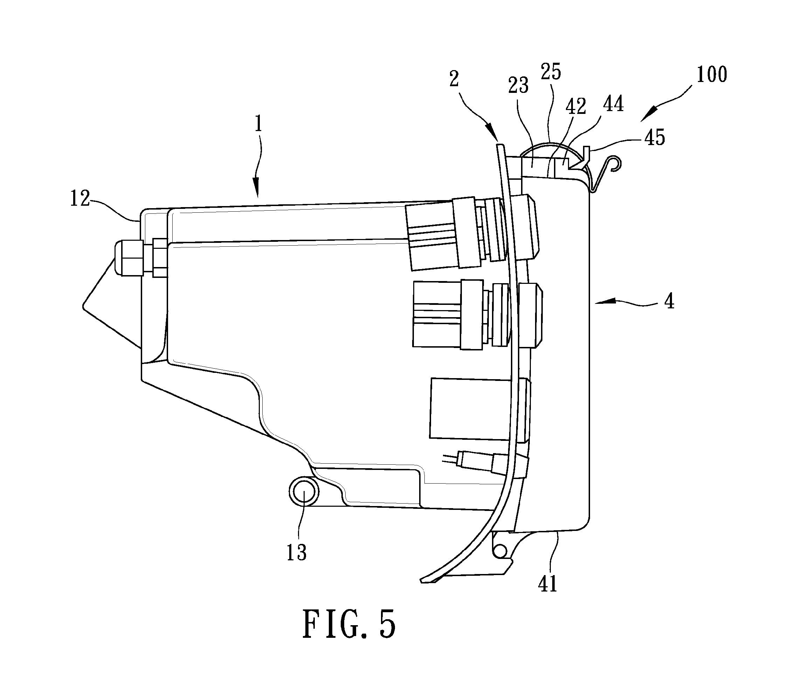

Referring again to Figures 5 to 8, the cover body 4 is in the form of a cap, and is rectangular in this embodiment. The cover body 4 has a connecting end 41 connected pivotally to a lower portion of the mounting plate 2, and a free end 42 opposite to the connecting end 41. The cover body 4 is rotatable relative to the mounting plate 2 between a closed position, where the free end 42 of the cover body 4 is adj acent to the mounting plate 2 to partially cover the outer surface 21 of the mounting plate 2, and an open position, where the free end 42 of the cover body 4 is spaced apart from the mounting plate 2 to expose the outer surface 21 of the mounting plate 2. In this embodiment, the cover body 2 further has two extension lugs 44 and an extension handle 45 that project outwardly from the free end 42 of the cover body 4. The extension handle 45 is disposed between the extension lugs 44. When the cover body 4 is in the closed position, each anchoring fastener 25 of the mounting plate 2 releasably anchors a respective extension lug 44 (see Figure 5). The cover body 4 has an inner surface 40 that abuts against the outer circumference 221 of the looped projection 22 when the cover body 4 is in the closed position, thereby covering the mounting surface area 211 of the outer surface 21 of the mounting plate 2 (see Figure 8). In addition, the cover body 4 further has a waterproof loop 43, and two positioning plugs 46 (only one is shown in Figure 8). The waterproof loop 43 is attached to the inner surface 40 of the cover body 4 in a manner that the waterproof loop 43 is sealingly clamped between the inner surface 40 of the cover body 4 and a front edge of the looped projection 22 of the mounting plate 2 when the cover body 4 is in the closed position (see Figure 8). Each positioning plug 46 integrally projects from the inner surface 40 of the cover body 4, and is inserted into and releasably engages the positioning hole 240 in a respective protrusion 24 of the mounting plate 2 when the cover body 4 is in the closed position, thereby positioning the cover body 4 in the closed position (see Figure 8).

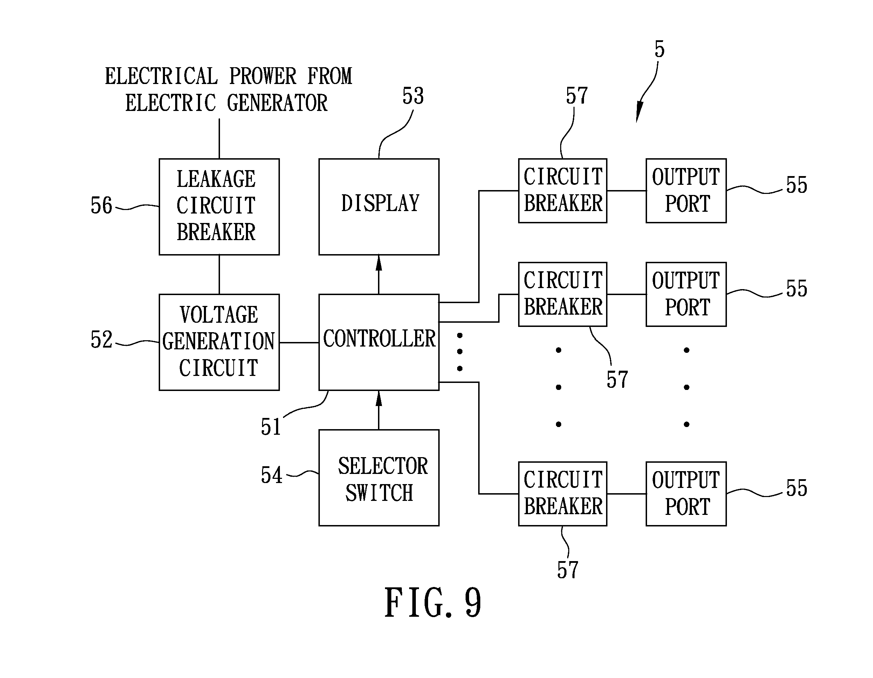

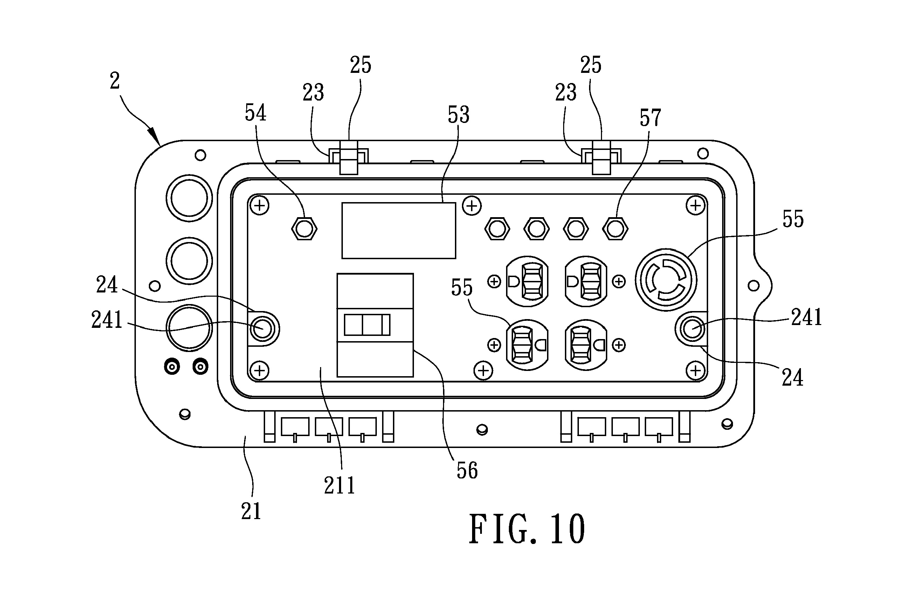

Referring further to Figures 8 to 10, the electrical unit 5 is mounted to an assembly of the casing 1 and the mounting plate 2, and is adapted to receive the electrical power from the electric generator 33 of the utility vehicle. The electrical unit 5 is operable to generate, based on the electrical power, a plurality of voltage outputs, each of which has an individual voltage, e.g., AC 110 volt or AC 220 volt. In this embodiment, the electrical unit 5 includes a controller, a voltage generation circuit 52, a display 53, a selector switch 54, a plurality of output ports 55, a leakage circuit breaker 56, and a plurality of circuit breakers 57. The controller 51 and the voltage generation circuit 52 are disposed in the accommodating space 10 in the casing 1. The voltage generation circuit 52 is adapted to receive the electrical power from the electric generator of the utility vehicle, and is operable to generate the voltage outputs based on the electrical power in a known manner. The output ports 55 are in the form of power sockets, and are respectively mounted to the mounting surface area 211 of the outer surface 21 of the mounting plate 2 (see Figure 10). The controller 51 is coupled to the voltage generation circuit 52 for receiving the voltage outputs from the voltage generation circuit 52, and outputs the voltage outputs respectively to the output ports 55. The leakage circuit breaker 56 and the leakage breakers 57, which serve as safety switches, are mounted to the mounting surface area 211 of the outer surface 21 of the mounting plate 2 (see Figure 10). The leakage circuit breaker 56 is adapted to be coupled between the electric generator 33 of the utility vehicle and the voltage generation circuit 52. Each circuit breaker 57 is coupled between the controller 51 and a respective output port 55. The leakage circuit breaker 56 is used to prevent electric shocks from passing through human bodies and fires from occurring due to leakage. Each circuit breaker 57 is used to cut off an excessive amount of current due to a short circuit and the overflow of current caused by excessive usage of a load (i.e., an electrical appliance). Additionally, the leakage circuit breaker 56 can be manually operated to cut off the electrical power from the electric generator 33 of the utility vehicle. The display 53 is mounted to the mounting surface area 211 of the outer surface 21 of the mounting plate 2, and is coupled to and controlled by the controller 51. The selector switch 54 is mounted to the mounting surface area 211 of the outer surface 21 of the mounting plate 2, and is coupled to the controller 51. The selector switch 54 is operable to generate a selection signal corresponding to the desired one of the voltage outputs, and outputs the selection signal to the controller 51 such that the controller 51 controls the display 53 in response to the selection signal from the selector switch 54 to display the individual voltage of the desired one of the voltage outputs thereon.

To sum up, the electrical power distribution module of the present invention is designed to be mounted to the front protection plate 34 of the utility vehicle, thereby facilitating operation during use. Furthermore, due to the presence of the cover body 4 with the waterproof loop 43, damage to electrical components of the electrical unit 5 due to dusty, foggy or misty conditions can be minimized.

## Claims

1. An electrical power distribution module (100) for a utility vehicle, the utility vehicle including a vehicle body frame (31), an engine (32) mounted to the vehicle body frame (31), an electric generator (33) mounted to the vehicle body frame (31) and driven by the engine (32) to generate electrical power, and a front protection plate (34) secured to a front portion (312) of the vehicle body frame (31) and provided with a steering wheel (35) and a dashboard (36) thereon, **characterized by**:
a hollow casing (1) adapted to be secured to the front portion (312) of the vehicle body frame (31) and configured with an accommodating space (10) therein, said casing (1) having a front end opening (11) in spatial communication with said accommodating space (10);
a mounting plate (2) connected to said casing (1) for closing said front end opening (11) thereof, and adapted to be secured to the front protection plate (34) of the utility vehicle, said mounting plate (2) having an outer surface (21);
a cover body (4) connected pivotally to said mounting plate (2) and rotatable relative to said mounting plate (2) between a closed position, where said cover body (4) partially covers said outer surface (21) of said mounting plate (2), and an open position, where said outer surface (21) of saidmountingplate (2) is exposed; and
an electrical unit (5) mounted to an assembly of said casing (1) and said mounting plate (2), and adapted to receive the electrical power from the electric generator (33) of the utility vehicle, said electrical unit (5) being operable to generate, based on the electrical power, a plurality of voltage outputs, each of which has an individual voltage.

2. The electrical power distribution module (100) as claimed in Claim 1, **characterized in that** said casing (1) further has a rear drain outlet (13) at bottom thereof, said rear drain outlet (13) being in spatial communication with said accommodating space (10).

3. The electrical power distribution module (100) as claimed in Claim 1, **characterized in that**:
said cover body (4) has a connecting end (41) connected pivotally to said mounting plate (2), a free end (42) opposite to said connecting end (41), and at least one extension lug (44) projecting outwardly from said free end (42); and
said mounting plate (2) is provided with at least one resilient anchoring fastener (25) for releasably anchoring said extension lug (44) when said cover body (4) is in the closed position.

4. The electrical power distribution module (100) as claimed in Claim 3, further **characterized in that** said cover body (4) further has an extension handle (45) projecting outwardly from said free end (42) of said cover body (4).

5. The electrical power distribution module (100) as claimed in Claim 1, **characterized in that**:
said mounting plate (2) has a looped projection (22) integrally projecting from said outer surface (21) thereof such that said outer surface (21) of said mounting plate (2) defines a mounting surface area (211)surrounded by said looped projection (22), said looped projection (22)having an outer circumference (221); and
said cover body (4) is in the form of a cap, and has an inner surface (40) that abuts against said outer circumference (221) of said looped projection (22) when said cover body (4) is in the closed position, thereby covering said mounting surface area (211) of said outer surface (21) of said mounting plate (2).

6. The electrical power distribution module (100) as claimed in Claim 5, further **characterized in that** said cover body (4) further has a waterproof loop (43)attached to said inner surface (40) thereof in a manner that said waterproof loop (43) is sealingly clamped between said inner surface (40) of said cover body (4) and said looped projection (22) of said mounting plate (2) when said cover body (4) is in the closed position.

7. The electrical power distribution module (100) as claimed in Claim 5, further **characterized in that**:
said mounting plate (2) further has a protrusion (24) that protrudes from said mounting surface area (211) of said outer surface (21) thereof and that is formed with a positioning hole (240); and
said cover body (4) further has a positioning plug (44) that projects from said inner surface (40) thereof and that releasably engages said positioning hole (240) in said protrusion (24) of said mounting plate (2) when said cover body (4) is in the closed position, thereby positioning said cover body (4) in the closed position.

8. The electrical power distribution module (100) as claimed in Claim 5, further **characterized in that** said electrical unit (5) includes:
a voltage generation circuit (52) disposed in said accommodating space (10) and adapted to receive the electrical power from the electric generator (33) of the utility vehicle, said voltage generation circuit (52) being operable to generate the voltage outputs based on the electrical power;
a plurality of output ports (55) mounted to said mounting surface area (211) of said outer surface (21) of said mounting plate (2);
a controller (51) disposed in said accommodating space (10), and coupled to said voltage generation circuit (52) and said output ports (55), said controller (51) receiving the voltage outputs from said voltage generation circuit (52), and outputting the voltage outputs respectively to said output ports(55); and
a display (53) mounted to said mounting surface area (211) of said outer surface (21) of said mounting plate (2), and coupled to and controlled by said controller (51) to display the individual voltage of a desired one of the voltage outputs thereon.

9. The electrical power distribution module (100) as claimed in Claim 8, further **characterized in that** said electrical unit (5) further includes:
a selector switch (54) mounted to said mounting surface area of said outer surface (21) of said mounting plate (2) and coupled to said controller (51), said selector switch (54) being operable to generate a selection signal corresponding to the desired one of the voltage outputs, and outputting the selection signal to said controller (51) such that said display (53) is controlled by said controller (51) in response to the selection signal from said selector switch (54) to display the individual voltage of the desired one of the voltage outputs thereon;
a leakage circuit breaker (56) mounted to said mounting surface area (211) of said outer surface (21) of said mounting plate (2), and adapted to be coupled between the electric generator (33) and said voltage generation circuit (52), said leakage circuit breaker (56) being operable to cut off the electrical power from the electric generator (33) of the utility vehicle; and
a plurality of circuit breakers (57) each mounted to saidmounting surface area (211) of said outer surface (21) of said mounting plate (2) and coupled between said controller (51) and a respective one of said output ports (55).
